# EUROPEAN PATENT APPLICATION

(11) **EP 4 838 894 A1**
(43) Date of publication of application: **11.11.2026**
(21) Application number: 24923506.0
(22) Date of filing: 09.12.2024
(51) Int. Cl.: H04N 21/436, H04N 21/422

(54) **VIDEO PLAYBACK METHOD AND APPARATUS, DEVICE, AND STORAGE MEDIUM**

(30) Priority: 08.02.2024 CN 202410177321
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: TANG, Tianlong, Ningbo, Zhejiang 315899 (CN)
(74) Representative: Boult Wade Tennant LLP
(86) International application number: PCT/CN2024/137850
(87) International publication number: WO 2025/167304

(57) **Abstract**

The present application discloses a video playback method and apparatus, a device, and a storage medium, and relates to the field of large-screen interaction technologies. A server device acquires a network state of a network between the server device and a large screen in response to receiving a remote control playback instruction for a target video sent by a client device, performs at least one of image frame blending and image frame compression preprocessing on an image frame comprised in the target video according to the network state and a large-screen resolution, to obtain preprocessed video data corresponding to the target video, encodes (S203) the preprocessed video data, to obtain encoded video data corresponding to the target video, and sends (S204) the encoded video data to the large screen to play the target video on the large screen. By performing at least one of image frame blending and image frame compression preprocessing on image frames included in the target video, the transmission of the target video is optimized, and the probability of stuttering or crash is reduced when the target video is remotely controlled to play on the large screen.

## Description

The present application claims priority to Chinese Patent Application No 202410177321.2, filed with the China National Intellectual Property Administration on February 08, 2024 and entitled "VIDEO PLAYBACK METHOD AND APPARATUS, DEVICE, AND STORAGE MEDIUM", which is incorporated herein by reference in its entirety.

### TECHNICAL FIELD

Embodiments of the present application relates to but is not limited to the field of large-screen interaction technologies and, in particular, to a video playback method and apparatus, a device, and a storage medium.

### BACKGROUND

With the development of large-screen interaction, there is an increasing demand for remotely controlling and operating a large screen using a terminal device such as a portable Android device (Portable android device, Pad for short).

For the current video playback method, a large screen is connected to a personal computer (Personal Computer, PC for short) host and operated by remote control through the PC, where the PC includes a PC host and a display screen. Specifically, when a user has a video playback need, a playback instruction for the target video is inputted on an interface displayed on the display screen. Correspondingly, the PC host responds to this operation instruction, plays the target video on the display screen of the PC, and sends the played video content in real time to the large screen for playback.

When playing the video through the above method, there is a risk of remote control lagging.

### SUMMARY

The following is a summary of the subject matter described in detail herein. This summary is not intended to limit the protection scope of the claims.

The present application provides a video playback method and apparatus, a device, and a storage medium.

In a first aspect, an embodiment of the present application provides a video playback method, applied to a server device in a video playback system, where the video playback system further includes a client device and a large screen both connected to the server device, and a user interacts with the client device to remotely control the large screen to play a target video; where the video playback method includes: in response to receiving a remote control playback instruction for the target video sent by the client device, acquiring a network state of a network between the server device and the large screen; performing preprocessing on an image frame included in the target video according to the network state and a large-screen resolution, to obtain preprocessed video data corresponding to the target video, where the preprocessing includes at least one of image frame blending and image frame compression; encoding the preprocessed video data, to obtain encoded video data corresponding to the target video; sending the encoded video data to the large screen to play the target video on the large screen.

In one possible implementation, different network states correspond to different preprocessing manners, a better network state corresponds to the preprocessed video data having higher image quality; and/or different large-screen resolutions correspond to different preprocessing manners, a higher large screen resolution corresponds to the preprocessed video data having higher image quality.

In one possible implementation, the performing preprocessing on an image frame included in the target video according to the network state and a large-screen resolution, to obtain preprocessed video data corresponding to the target video includes: if video content of the target video includes a 3D scene, playing the target video frame by frame, and sampling a rendered image in real time during playback; converting a 3D image frame corresponding to the 3D scene into a 2D image frame; performing preprocessing on the 2D image frame according to the network state and the large-screen resolution, to obtain the preprocessed video data corresponding to the target video.

In one possible implementation, the preprocessing includes the image frame blending, and the method further includes: for a target image frame on which the image frame blending is to be performed, storing the target image frame prior to the image frame blending is performed.

In one possible implementation, the encoding the preprocessed video data, to obtain encoded video data corresponding to the target video comprises: performing binary encoding on the preprocessed video data, to obtain encoded video data corresponding to the target video.

In one possible implementation, both the client device and the server device are mobile terminals.

In a second aspect, an embodiment of the present application provides a video playback method, applied to a large screen in a video playback system, where the video playback system further includes a client device and a server device respectively connected to the client device and the large screen, and a user interacts with the client device to remotely control the large screen to play a target video; where the video playback method includes: receiving encoded video data corresponding to the target video sent by the server device, where the encoded video data is obtained by preprocessing and encoding the target video by the server device, and the preprocessing includes at least one of image frame blending and image frame compression; decoding the encoded video data, to obtain decoded video data corresponding to the target video; performing at least one of image frame decompression and image frame separation processing on the decoded video data, and playing a processed image frame.

In one possible implementation, the performing at least one of image frame decompression and image frame separation processing on the decoded video data, and playing a processed image frame includes: determining preprocessing corresponding to the decoded video data, where the preprocessing includes at least one of image frame blending and image frame compression; if the preprocessing corresponding to the decoded video data includes the image frame compression, performing the image frame decompression on the decoded video data, to obtain image-frame-decompressed video data corresponding to the target video; if the preprocessing corresponding to the decoded video data includes image frame blending, performing the image frame separation on the decoded video data, to obtain the processed image frame; playing the processed image frame.

In one possible implementation, both the client device and the server device are mobile terminals.

In a third aspect, an embodiment of the present application provides a video playback system, including: a client device, a server device, and a large screen, where the server device is respectively connected to the client device and the large screen;
the client device is configured to interact with a user to remotely control the large screen to play the target video;
the server device is configured to perform the video playback method provided in the first aspect;
the large screen is configured to perform the video playback method provided in the second aspect.

In one possible implementation, both the client device and the server device are mobile terminals.

In a fourth aspect, an embodiment of the present application provides a video playback apparatus, applied to a server device in a video playback system, where the video playback system further includes a client device and a large screen both connected to the server device, and a user interacts with the client device to remotely control the large screen to play a target video; where the video playback apparatus includes:
an acquisition module, configured to, in response to receiving a remote control playback instruction for the target video sent by the client device, acquire a network state of a network between the server device and the large screen;
a preprocessing module, configured to perform preprocessing on an image frame included in the target video according to the network state and a large-screen resolution, to obtain preprocessed video data corresponding to the target video, where the preprocessing includes at least one of image frame blending and image frame compression;
an encoding module, configured to encode the preprocessed video data, to obtain encoded video data corresponding to the target video;
a sending module, configured to send the encoded video data to the large screen to play the target video on the large screen.

In one possible implementation, different network states correspond to different preprocessing manners, a better network state corresponds to the preprocessed video data having higher image quality; and/or different large-screen resolutions correspond to different preprocessing manners, a higher large screen resolution corresponds to the preprocessed video data having higher image quality.

In one possible implementation, the preprocessing module is specifically configured to: if video content of the target video includes a 3D scene, play the target video frame by frame, and sample a rendered image in real time during playback; convert a 3D image frame corresponding to the 3D scene into a 2D image frame; perform preprocessing on the 2D image frame according to the network state and the large-screen resolution, and obtain the preprocessed video data corresponding to the target video.

In one possible implementation, the preprocessing includes the image frame blending, and it further includes: for a target image frame on which the image frame blending is to be performed, storing the target image frame prior to the image frame blending is performed.

In one possible implementation, the encoding module is specifically configured to: perform binary encoding on the preprocessed video data, to obtain encoded video data corresponding to the target video.

In one possible implementation, both the client device and the server device are mobile terminals.

In a fifth aspect, an embodiment of the present application provides a video playback apparatus, applied to a large screen in a video playback system, where the video playback system further includes a client device and a server device respectively connected to the client device and the large screen, and a user interacts with the client device to remotely control the large screen to play a target video; where the video playback apparatus includes:
a receiving module, configured to receive encoded video data corresponding to the target video sent by the server device, where the encoded video data is obtained by preprocessing and encoding the target video by the server device, and the preprocessing includes at least one of image frame blending and image frame compression;
a decoding module, configured to decode the encoded video data, to obtain decoded video data corresponding to the target video;
a playback module, configured to perform at least one of image frame decompression and image frame separation processing on the decoded video data, and play a processed image frame.

In one possible implementation, the playback module is specifically configured to: determine preprocessing corresponding to the decoded video data, where the preprocessing includes at least one of image frame blending and image frame compression processing; if the preprocessing corresponding to the decoded video data includes the image frame compression, perform the image frame decompression on the decoded video data, to obtain image-frame-decompressed video data corresponding to the target video; if the preprocessing corresponding to the decoded video data includes the image frame blending, perform the image frame separation on the decoded video data, to obtain the processed image frame; play the processed image frame.

In one possible implementation, both the client device and the server device are mobile terminals.

In a sixth aspect, an embodiment of the present application provides an electronic device, including:
at least one processor;
and a memory communicatively connected with the at least one processor;
where the memory is configured to store instructions executable by the at least one processor, the instructions are executed by the at least one processor to enable the at least one processor to perform the video playback method provided in the first aspect and/or the second aspect.

In a seventh aspect, an embodiment of the present application provides a computer-readable storage medium, where the computer-readable storage medium stores computer-executable instructions, and when the computer-executable instructions are executed by a processor, the video playback method provided in the first aspect and/or the second aspect is implemented.

In an eighth aspect, an embodiment of the present application provides a program product including computer-executable instructions. When the computer-executable instructions are executed, the video playback method provided in the first aspect and/or the second aspect is implemented.

In a ninth aspect, an embodiment of the present application provides a computer program, when the computer program runs on a computer, the computer performs the video playback method provided in the first aspect and/or the second aspect. Embodiments of the present application provide a video playback method and apparatus, a device, and a storage medium. The server device acquires a network state of a network between the server device and the large screen in response to receiving a remote control playback instruction for the target video sent by the client device, performs at least one of image frame blending and image frame compression preprocessing on an image frame included in the target video according to the network state and a large-screen resolution, to obtain preprocessed video data corresponding to the target video, encodes the preprocessed video data, to obtain encoded video data corresponding to the target video, and sends the encoded video data to the large screen to play the target video on the large screen. In the present application, by performing at least one of image frame blending and image frame compression preprocessing on image frames included in a target video, the amount of video data to be transmitted is reduced, thereby the transmission of the target video is optimized, and the probability of stuttering or crash is reduced when the target video is remotely controlled to play on the large screen.

After reading and understanding the accompanying drawings and detailed description, other aspects can be understood.

### BRIEF DESCRIPTION OF DRAWINGS

The accompanying drawings are incorporated into the specification and form a part of the specification, illustrating embodiments in accordance with the present application and used together with the specification to explain the principles of the present application.
FIG. 1 is a schematic diagram of a video playback system provided in an embodiment of the present application.
FIG. 2 is a flowchart of a video playback method provided in an embodiment of the present application.
FIG. 3 is a flowchart of a video playback method provided in another embodiment of the present application.
FIG. 4 is a schematic diagram of drop-down of encoding and decoding provided in an embodiment of the present application.
FIG. 5 is a schematic structural diagram of a video playback apparatus provided in an embodiment of the present application.
FIG. 6 is a schematic structural diagram of a video playback apparatus provided in another embodiment of the present application.
FIG. 7 is a schematic structural diagram of an electronic device provided in an embodiment of the present application.

The specific embodiments of the present application have been illustrated through the above accompanying drawings, which will be described in more detail below. These accompanying drawings and literal descriptions are not intended to limit the scope of the concept of the present application in any way, but to explain the concept of the present application to those skilled in the art by referring to specific embodiments.

### DESCRIPTION OF EMBODIMENTS

Illustrative embodiments will be described in detail herein, examples of which are shown in the accompanying drawings. When the following description refers to the accompanying drawings, unless otherwise indicated, the same numbers in different accompanying drawings indicate the same or similar elements. Implementations described in the following illustrative embodiments do not represent all embodiments consistent with the present application. On the contrary, they are merely examples of apparatus and methods consistent with some aspects of the present application as detailed in the appended claims.

In an optional manner, when a large-screen program is remotely controlled and operated by using a terminal device, if the program runs on the large screen, all consumed computing power comes from the central processing unit (Central Processing Unit, CPU for short) of the large screen. However, the CPU of the large screen is relatively backward, in particular, when running a three dimensional (Three Dimensions, 3D for short) program, the large screen may suffer from overheating, lagging and crashing problems.

Based on the above problem, an embodiment of the present application mainly concentrates the computing power consumed by remotely controlling the large screen on other ends outside the large screen, such as a remote controlling end, and the large screen serves as a remote controlled end. Preprocessing on resources to be transmitted to the large screen is performed to reduce the to-be-transmitted data volume, so as to optimize transmission and lower the probability of stuttering or crash occurring on the large screen.

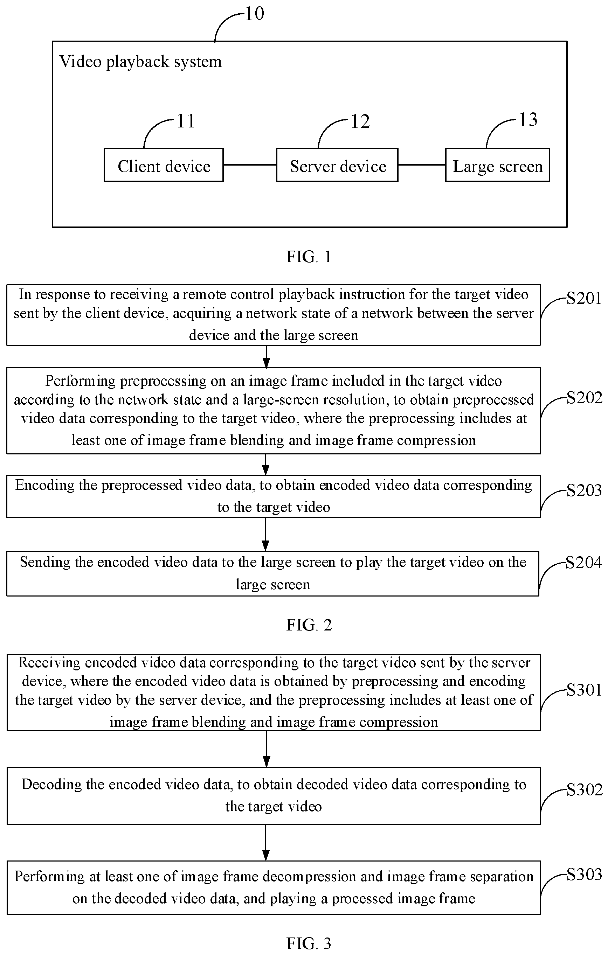

FIG. 1 is a video playback system provided in an embodiment of the present application. As shown in FIG. 1, the video playback system 10 includes a client device 11, a server device 12, and a large screen 13.

Optionally, the server device 12 is respectively connected to the client device 11 and the large screen 13.

Exemplarily, the remote control instruction data may be transmitted between the server device 12 and the client device 11 through the user datagram (User Datagram Protocol, UDP for short) protocol, and the connection between the server device 12 and the large screen 13 may be a near-field communication connection.

Specifically, the client device 11 is configured to interact with a user to remotely control the large screen to play the target video. The server device 12 is configured to acquire a network state of a network between the server device 12 and the large screen 13 in response to receiving a remote control playback instruction for the target video sent by the client device 11, perform preprocessing on an image frame included in the target video according to the network state and a large-screen resolution, encode the preprocessed video data corresponding to the target video, and further send the encoded video data to the large screen 13 to play the target video on the large screen 13. The large screen 13 is configured to receive the encoded video data corresponding to the target video sent by the server device 12, decode the encoded video data, to obtain decoded video data corresponding to the target video, and further perform at least one of image frame decompression and image frame separation processing on the decoded video data, and play a processed image frame.

In addition, considering that when a PC is used to remotely control and operate the large screen, in a scenario of a chain store or automobile 4S store, it is possible to configure 1 to 2 high-specification PC hosts for each store, which results in excessively high costs and low convenience of PC hosts. Therefore, optionally, both the client device 11 and the server device 12 are mobile terminals. Specifically, the client device 11 is loaded with a remote control application for interacting with a user to remotely control the large screen, and the server device 12 is loaded with an operation program for playing a target video. Exemplarily, the operation program may be a 3D program.

The following is a detailed description of the video playback method provided in an embodiment of the present application in combination with a specific embodiment.

FIG. 2 is a flowchart of a video playback method provided in an embodiment of the present application. It is applied to the server device in the above video playback system. As shown in FIG. 2, the video playback method specifically includes the following steps:
S201, in response to receiving a remote control playback instruction for the target video sent by the client device, a network state of a network between the server device and the large screen is acquired.

Optionally, both the server device and the client device are mobile terminals.

Exemplarily, the remote control playback instruction may include a finger swipe instruction and a color change instruction etc.

Exemplarily, the data corresponding to the remote control playback instruction is transmitted based on the UDP protocol, where the instruction consists of a protocol number and content, and the first 8 bits of the instruction are the protocol number.

Optionally, the remote control playback instruction for the target video sent by the client device may be an encrypted binary instruction. Exemplarily, the encryption manner of the instruction may be MD5.

In a possible implementation, after performing obfuscation and encryption according to the remote control playback instruction, a user may further perform MD5 encryption thereon, convert the MD5 encrypted result into binary, further bind the original instruction name with MD5 to facilitate version management, and generate a json corresponding to the instruction set and MD5 for convenient indexing and searching.

In a possible implementation, before acquiring the network state, the server device further performs instruction decoding on the remote control playback instruction. Specifically, the server device updates json in real time, parses the binary to obtain the MD5-processed remote control playback instruction, and searches the json for the specific remote control playback instruction corresponding to MD5. After the remote control playback instruction is found, the first eight bits thereof serve as the remote control playback instruction to be executed by the server device, and the remaining bits are arbitrary parameters.

Optionally, the network state of the network between the server device and the large screen is determined according to a real-time monitored network rate. Specifically, a network rate with a latency less than 50 MS (milliseconds) is determined to correspond to a high-grade network state; a network rate with a latency less than 100 MS (milliseconds) is determined to correspond to a medium-grade network state; and a network rate with a latency greater than 100 MS (milliseconds) is determined to correspond to a low-grade network state.

S202, the preprocessing on an image frame included in the target video is performed according to the network state and a large-screen resolution to obtain preprocessed video data corresponding to the target video, where the preprocessing includes at least one of image frame blending and image frame compression.

Optionally, different network states correspond to different preprocessing manners, a better network state corresponds to the preprocessed video data having higher image quality; and/or different large-screen resolutions correspond to different preprocessing manners, a higher large screen resolution corresponds to the preprocessed video data having higher image quality.

In one possible implementation, when the large-screen resolution is a first resolution, the resolutions corresponding to the image quality of the preprocessed video data under the high-grade, medium-grade and low-grade network states are set to the first resolution, the second resolution and the third resolution respectively; when the resolution of the large screen is the second resolution, the resolutions corresponding to the image quality of the preprocessed video data under the high-grade, medium-grade and low-grade network states are set to the second resolution, the third resolution and the fourth resolution respectively.

Exemplarily, the first resolution may be 2K, the second resolution may be 1080P, the third resolution may be 720P, and the fourth resolution may be 480P.

Optionally, at least two frames are blended in the image frame blending processing. For example, the image frame blending is performed on image frame A, image frame B and image frame C to obtain image frame D. Correspondingly, before playing the target video, the large screen performs separation on image frame D to obtain image frame A, image frame B and image frame C.

Optionally, whether to perform image frame blending on the image frame included in the target video is determined according to the network state. Specifically, no image frame is blended when the network state is at a high-grade; two image frames are blended when the network state is at a medium-grade; and three image frames are blended when the network state is at a low-grade.

Optionally, for a target image frame on which the image frame blending is to be performed, the target image frame is stored prior to the image frame blending is performed.

Optionally, the image frame is compressed according to the network state. Specifically, the image frame is compressed with a compression strength of a first preset value when the network state is at a high-grade; the image frame is compressed with a compression strength of a second preset value when the network state is at a medium-grade; and the image frame is compressed with a compression strength of a third preset value when the network state is at a low-grade. Exemplarily, the first preset value may be 5, the second preset value may be 7, and the third preset value may be 9.

S203, the preprocessed video data is encoded to obtain encoded video data corresponding to the target video.

The purpose of encoding is also to reduce the amount of data to be transmitted. Therefore, an embodiment of the present application does not limit the specific encoding mode adopted for encoding. Optionally, the binary encoding is performed on the preprocessed video data to obtain encoded video data corresponding to the target video.

S204, the encoded video data is sent to the large screen to play the target video on the large screen.

In an embodiment of the present application, a network state of a network between the server device and the large screen is acquired in response to receiving a remote control playback instruction for the target video sent by the client device, at least one of image frame blending and image frame compression preprocessing is performed on an image frame included in the target video according to the network state and a large-screen resolution, to obtain preprocessed video data corresponding to the target video, the preprocessed video data is encoded to obtain encoded video data corresponding to the target video, and the encoded video data is sent to the large screen to play the target video on the large screen. By performing at least one of image frame blending and image frame compression preprocessing on image frames included in the target video, the transmission rate of the preprocessed video data corresponding to the target video is optimized, and low-lag playback of the target video on a large screen is achieved.

Based on the above embodiments, optionally, the performing preprocessing on an image frame included in the target video according to the network state and a large-screen resolution, to obtain preprocessed video data corresponding to the target video, specifically includes the following steps: if video content of the target video includes a 3D scene, the target video is played frame by frame, and a rendered image is sampled in real time during playback; a 3D image frame corresponding to the 3D scene is converted into a 2D image frame; preprocessing is performed on the 2D image frame according to the network state and the large-screen resolution to obtain the preprocessed video data corresponding to the target video.

Exemplarily, the RenderTexture rendered image is sampled in real time during playback to convert a 3D scene into a 2D image.

The processing flow of the large screen after receiving the above encoded video data will be described below with reference to FIG. 3.

FIG. 3 is a flowchart of a video playback method provided in another embodiment of the present application. As shown in FIG. 3, the video playback method specifically includes the following steps:
S301, encoded video data corresponding to the target video sent by the server device is received, where the encoded video data is obtained by preprocessing and encoding the target video by the server device, and the preprocessing includes at least one of image frame blending and image frame compression.

Specifically, the preprocessing and encoding manners are similar to those mentioned above, and will not be further elaborated herein.

S302, the encoded video data is decoded to obtain decoded video data corresponding to the target video.

Optionally, if a correct compressed packet is obtained after decoding, it will be decompressed; if incorrect data is obtained, it will be discarded and waited.

Exemplarily, if binary encoding is adopted for encoding, then binary decoding is correspondingly adopted for decoding.

It can be understood that for different playback platforms of the target video corresponding to the large screen, the corresponding encoding and decoding manners for video data may be the same encoding script and decoding script.

Exemplarily, the encoding and decoding manners for video data may also be determined according to the playback platform of the target video corresponding to the large screen, where different platforms correspond to different encoding scripts and decoding scripts.

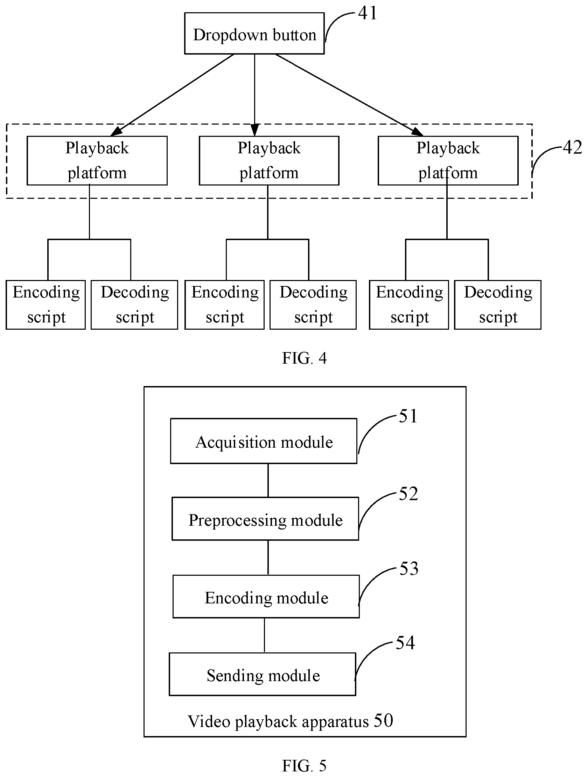

FIG. 4 is a schematic diagram of drop-down of encoding and decoding provided in an embodiment of the present application. As shown in FIG. 4, a dropdown button 41 corresponding to encoding and decoding is clicked to select a corresponding playback platform 42, and according to the selected playback platform 42, the encoding script and decoding script corresponding to the playback platform 42 are further determined. Exemplarily, the playback platform may include an Android playback platform, an Apple playback platform, and a television playback platform (television, TV for short).

S303, at least one of image frame decompression and image frame separation processing is performed on the decoded video data, and a processed image frame is played.

Optionally, preprocessing corresponding to the decoded video data is determined, where the preprocessing includes at least one of image frame blending and image frame compression; if the preprocessing corresponding to the decoded video data includes the image frame compression, the image frame decompression processing is performed on the decoded video data, to obtain image-frame-decompressed video data corresponding to the target video; if the preprocessing corresponding to the decoded video data includes the image frame blending, the image frame separation is performed on the decoded video data, to obtain the processed image frame; the processed image frame is played.

Specifically, the first 8 bits of the binary data are parsed to determine whether image frames are blended. If three frame are blended, the second frame and the third frame will be stored in the memory, and the first frame is to be played; if two frame are blended, the second frame will be stored in the memory for playback.

The large screen loads the image frame from the memory in real time, stores the image frame in a queue, and adopts a stack push-pop form. That is, the image frame is stored into the memory in real time in the previous step, and at the same time, the image frame is acquired from the memory and pushed into the stack in real time, and then popped out of the stack for parsing and playback in real time.

In the present embodiment of the application, encoded video data corresponding to the target video sent by the server device is received, the encoded video data is decoded to obtain decoded video data corresponding to the target video, and further at least one of image frame decompression and image frame separation processing is performed on the decoded video data, and a processed image frame is played. The computing power consumed by the large screen during video playback is reduced, and the probability of stuttering and crash of the large screen is reduced.

In summary, it can be appreciated that, in the video playback method provided in embodiments of the present application, on the one hand, no additional PC host is required, and existing mobile terminal devices can be directly used for graphic transmission to achieve low cost; meanwhile, the adoption of the mobile terminal instead of the PC host also improves convenience; on the other hand, without the need to provide the PC host, the computing power of the mobile terminal device is utilized without consuming the computing power of the large screen, thereby achieving high performance.

The following is apparatus embodiments of the present application, which can be used to implement the method embodiments of the present application. For details not disclosed in the apparatus embodiments of the present application, please refer to the method embodiments of the present application.

FIG. 5 is a schematic structural diagram of a video playback apparatus provided in an embodiment of the present application. It is applied to a server device in a video playback system, where the video playback system further includes a client device and a large screen both connected to the server device, and a user interacts with the client device to remotely control the large screen to play a target video. As shown in FIG. 5, the video playback apparatus 50 includes: an acquisition module 51, a preprocessing module 52, an encoding module 53 and a sending module 54.

The acquisition module 51 is configured to acquire a network state of a network between the server device and the large screen in response to receiving a remote control playback instruction for the target video sent by the client device.

The preprocessing module 52 is configured to perform preprocessing on an image frame included in the target video according to the network state and a large-screen resolution, to obtain preprocessed video data corresponding to the target video, where the preprocessing includes at least one of image frame blending and image frame compression.

The encoding module 53 is configured to encode the preprocessed video data, to obtain encoded video data corresponding to the target video.

The sending module 54 is configured to send the encoded video data to the large screen to play the target video on the large screen.

In one possible implementation, different network states correspond to different preprocessing manners, a better network state corresponds to the preprocessed video data having higher image quality; and/or different large-screen resolutions correspond to different preprocessing manners, a higher large screen resolution corresponds to the preprocessed video data having higher image quality.

In one possible implementation, the preprocessing module 52 is specifically configured to: if video content of the target video includes a 3D scene, play the target video frame by frame, and sample a rendered image in real time during playback; convert a 3D image frame corresponding to the 3D scene into a 2D image frame; perform preprocessing on the 2D image frame according to the network state and the large-screen resolution, to obtain the preprocessed video data corresponding to the target video.

In one possible implementation, the preprocessing includes the image frame blending, and the apparatus further includes a storage module (not shown), configured to: for a target image frame on which the image frame blending is to be performed, store the target image frame prior to the image frame blending is performed.

In one possible implementation, the encoding module 53 is specifically configured to: perform binary encoding on the preprocessed video data, to obtain encoded video data corresponding to the target video.

In one possible implementation, both the client device and the server device are mobile terminals.

The video playback apparatus provided in this embodiment can be used to perform the method steps of the above method embodiments. The specific implementation method and technical effects are similar, which will not be repeated here.

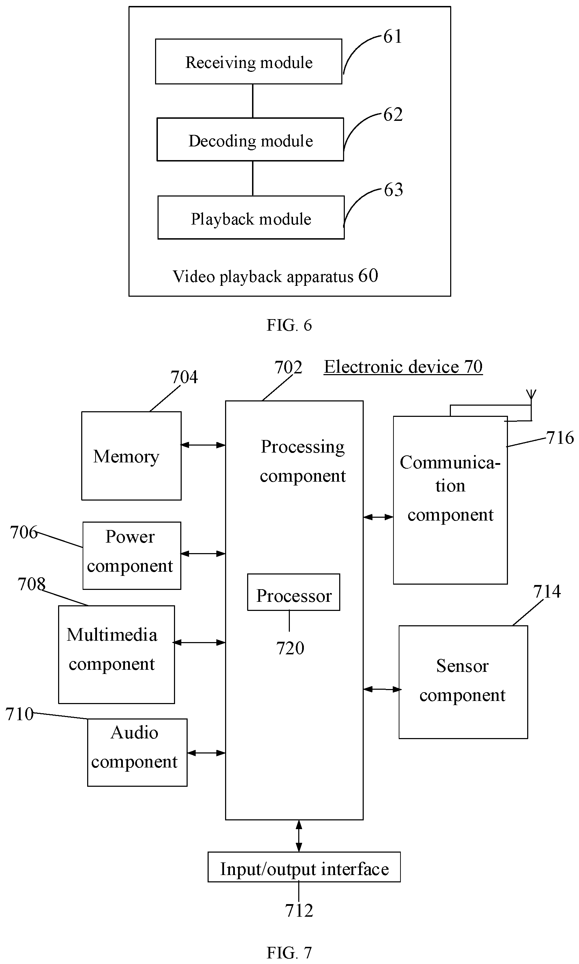

FIG. 6 is a schematic structural diagram of a video playback apparatus provided in another embodiment of the present application. It is applied to a large screen in a video playback system, where the video playback system further includes a client device and a server device respectively connected to the client device and the large screen, and a user interacts with the client device to remotely control the large screen to play a target video. As shown in FIG. 6, the video playback apparatus 60 includes: a receiving module 61, a decoding module 62 and a playback module 63.

The receiving module 61 is configured to receive encoded video data corresponding to the target video sent by the server device, where the encoded video data is obtained by preprocessing and encoding the target video by the server device, and the preprocessing includes at least one of image frame blending and image frame compression.

The decoding module 62 is configured to decode the encoded video data, to obtain decoded video data corresponding to the target video.

The playback module 63 is configured to perform at least one of image frame decompression and image frame separation processing on the decoded video data, and play a processed image frame.

In one possible implementation, the playback module 63 is specifically configured to: determine preprocessing corresponding to the decoded video data, where the preprocessing includes at least one of image frame blending and image frame compression; if the preprocessing corresponding to the decoded video data includes the image frame compression, perform the image frame decompression on the decoded video data, to obtain image-frame-decompressed video data corresponding to the target video; if the preprocessing corresponding to the decoded video data includes the image frame blending, perform the image frame separation on the decoded video data, to obtain the processed image frame; play the processed image frame.

In one possible implementation, both the client device and the server device are mobile terminals.

The video playback apparatus provided in this embodiment can be used to perform the method steps of the above method embodiments. The specific implementation method and technical effects are similar, which will not be repeated here.

It should be noted that the division of each module of the above apparatuses is only a logical function division. In actual implementation, they may be fully or partially integrated into a single physical entity, or may be physically separated. And these modules may be implemented entirely in software invoked by a processing element; or entirely in hardware; or some modules may be implemented by software invoked by a processing element, while the remaining modules are implemented in hardware. For example, the processing module may be an independently arranged processing element, or may be implemented by being integrated into a certain chip of the foregoing apparatuses. In addition, it can also be stored in the memory of the foregoing apparatuses in the form of program codes, and the functions of the processing module are invoked and executed by a certain processing element of the foregoing apparatuses. The implementation of other modules is similar to this. In addition, all or part of these modules may be integrated together or implemented independently. The processing element herein may be an integrated circuit with signal processing capability. During implementation, each step of the foregoing methods or each of the above modules may be accomplished by an integrated logic circuit of hardware in the processing element or by instructions in the form of software.

For example, the above modules may be one or more integrated circuits configured to implement the foregoing methods, such as one or more application specific integrated circuits (Application Specific Integrated Circuit, ASIC for short), one or more microprocessors (Digital Signal Processor, DSP for short), or one or more field programmable gate arrays (Field Programmable Gate Array, FPGA for short). As another example, when any of the above modules is implemented in the form of scheduling program codes by a processing element, the processing element may be a general-purpose processor, such as a central processing unit (Central Processing Unit, CPU for short) or any other processor capable of invoking program codes. Further, these modules may be integrated together and implemented in the form of a system on a chip (System-On-a-Chip, SoC for short).

In the foregoing embodiments, the technical solution may be implemented in whole or in part by software, hardware, firmware, or any combination thereof. When implemented by software, it may be implemented in whole or in part in the form of a computer program product. The computer program product includes one or more computer instructions. When the computer instructions are loaded and executed on a computer, all or part of the processes or functions according to the embodiments of the present application are generated. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from a website, a computer, a server or a data center to another website, computer, server or data center in a wired manner (such as a coaxial cable, an optical fiber, or a digital subscriber line (Digital Subscriber Line, DSL for short)) or a wireless manner (such as infrared, wireless, microwave, etc.). The computer-readable storage medium may be any available medium that a computer can access, or a data storage device such as a server or a data center including one or more integrated available media. The available medium may be a magnetic medium (e.g., floppy disk, hard disk, magnetic tape), an optical medium (e.g., digital video disc (Digital Video Disc, DVD for short)), or a semiconductor medium (e.g., solid state disk (solid state disk, SSD)).

FIG. 7 is a schematic structural diagram of an electronic device provided in an embodiment of the present application. As shown in FIG. 7, the electronic device 70 may include one or more components below: a processing component 702, a memory 704, a power component 706, a multimedia component 708, an audio component 710, an input/output (I/O) interface 712, a sensor component 714, and a communication component 716.

The processing component 702 generally controls the overall operation of the electronic device 70, such as operations associated with display, phone call, data communication, camera operation, and recording operations. The processing component 702 may include at least one processor 720 to execute instructions so as to complete all or part of the steps of the foregoing methods. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 is configured to store various types of data to support the operation of the electronic device 70. Examples of such data include instructions for any application program or method running on the electronic device 70, contact data, phone book data, messages, images, videos, and the like. The memory 704 may be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 706 supplies power to various components of the electronic device 70. The power component 706 may include a power management system, one or more power supplies, and other components associated with generating, managing and distributing power for the electronic device 70.

The multimedia component 708 includes a screen providing an output interface between the electronic device 70 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensors may not only sense boundaries of a touch or slide action, but also detect the duration and pressure associated with the touch or slide operation. In some embodiments, the multimedia component 708 includes a front camera and/or a rear camera. When the electronic device 70 is in an operation mode, such as a shooting mode or a video mode, the front camera and/or the rear camera may receive external multimedia data. Each of the front camera and the rear camera may be a fixed optical lens system or have focal length and optical zoom capability.

The audio component 710 is configured to output and/or input audio signals. For example, the audio component 710 includes a microphone (MIC). When the electronic device 70 is in an operation mode, such as a call mode, a recording mode and a voice recognition mode, the microphone is configured to receive external audio signals. The received audio signals may be further stored in the memory 704 or transmitted via the communication component 716. In some embodiments, the audio component 710 further includes a speaker for outputting audio signals.

The I/O interface 712 provides an interface between the processing component 702 and peripheral interface modules. The peripheral interface module may be a keyboard, a click wheel, buttons, and the like. Such buttons may include, but are not limited to: a home button, a volume button, a start button, and a lock button.

The sensor component 714 includes one or more sensors for providing state evaluation of various aspects of the electronic device 70. For example, the sensor component 714 may detect an on/off state of the electronic device 70 and the relative positioning of components, for example, the components are a display and a keypad of the electronic device 70. The sensor component 714 may also detect a position change of the electronic device 70 or a component thereof, presence or absence of user contact with the electronic device 70, orientation or acceleration/deceleration of the electronic device 70, and a temperature change of the electronic device 70. The sensor component 714 may include a proximity sensor configured to detect presence of nearby objects without any physical contact. The sensor component 714 may further include an optical sensor, such as a CMOS or CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the electronic device 70 and other devices. The electronic device 70 may access a wireless network based on communication standards, such as Wi-Fi, 2G, 3G, or a combination thereof. In an exemplary embodiment, the communication component 716 receives broadcast signals or broadcast-related information from an external broadcast management system via a broadcast channel. In an exemplary embodiment, the communication component 716 further includes a near field communication (NFC) module to facilitate short-range communication. For example, the NFC module may be implemented based on a radio frequency identification (RFID) technology, an infrared data association (IrDA) technology, an ultra wide band (UWB) technology, a bluetooth (BT) technology and other technologies.

In an exemplary embodiment, the electronic device 70 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements for performing the method described above.

In an exemplary embodiment, there is further provided a non-transitory computer-readable storage medium including instructions, such as the memory 704 including instructions. The above instructions are executable by the processor 720 of the electronic device 70 to complete the above methods. For example, the non-transitory computer-readable storage medium may be a ROM, a random access memory (RAM), a CD-ROM, a magnetic tape, a floppy disk, an optical data storage device, and the like.

The electronic device of the embodiment of the present application can be used to perform the method steps in the above method embodiments, and the specific implementation method and technical effect are similar, which will not be repeated herein.

The embodiment of the present application also provides a computer-readable storage medium, where the computer-readable storage medium stores computer-executable instructions which, when executed by a processor, are configured to implement the method steps as described in the above method embodiments. The specific implementation method and technical effects are similar, which will not be repeated here.

The embodiment of the present application also provides a program product, where the program product includes computer-executable instructions. When the computer-executable instructions are executed, the method steps in the above method embodiments are implemented. The specific implementation method and technical effects are similar, which will not be repeated here.

The embodiment of the present application also provides a computer program which, when runs on a computer, enables the computer to execute the method steps as described in the above method embodiments. The specific implementation method and technical effects are similar, which will not be repeated here.

Those of ordinary skilled in the art may understand that all or part of the steps in the above methods may be completed by relevant hardware (such as a processor) instructed through a program. The program may be stored in a computer-readable storage medium, such as a read-only memory, a magnetic disk, an optical disc, and the like. Optionally, all or part of the steps of the above embodiments may also be implemented by using one or more integrated circuits. Correspondingly, each module/unit in the foregoing embodiments may be implemented in the form of hardware, for example, implementing its corresponding function through an integrated circuit, or may be implemented in the form of a software function module, for example, implementing its corresponding function by a processor executing programs/instructions stored in a memory. The present application is not limited to any specific combination form of hardware and software.

Persons skilled in the art will easily come up with other embodiments of the present application upon consideration of the specification and practicing of the invention disclosed herein. The present application is intended to cover any modifications, uses or adaptations of the present application that follow the general principles thereof and include common general knowledge or conventional technical means in the technical field not disclosed in the present application. The specification and embodiments are only considered exemplary, and the true scope and spirit of the present application are indicated by the following claims.

It should be understood that the present application is not limited to the precise structure described above and shown in the accompanying drawings, and various modifications and changes can be made without departing from its scope. The scope of the present application is limited only by the appended claims.

It should be noted that the user information (including but not limited to user device information, user personal information, etc.) and data (including but not limited to data used for analysis, stored data, displayed data, etc.) involved in the present application are all information and data authorized by the user or fully authorized by all parties, and the collection, use, and processing of relevant data must comply with relevant laws, regulations, and standards of relevant countries and regions, and provide corresponding operation entrances for users to choose to authorize or refuse.

## Claims

1. A video playback method, applied to a server device in a video playback system, wherein the video playback system further comprises a client device and a large screen both connected to the server device, and a user interacts with the client device to remotely control the large screen to play a target video;
wherein the video playback method comprises:
in response to receiving a remote control playback instruction for the target video sent by the client device, acquiring a network state of a network between the server device and the large screen;
performing preprocessing on an image frame comprised in the target video according to the network state and a large-screen resolution, to obtain preprocessed video data corresponding to the target video, wherein the preprocessing comprises at least one of image frame blending and image frame compression;
encoding the preprocessed video data, to obtain encoded video data corresponding to the target video;
sending the encoded video data to the large screen to play the target video on the large screen.

2. The video playback method according to claim 1, wherein different network states correspond to different preprocessing manners, a better network state corresponds to the preprocessed video data having higher image quality; and/or different large-screen resolutions correspond to different preprocessing manners; a higher large screen resolution corresponds to the preprocessed video data having higher image quality.

3. The video playback method according to claim 1 or 2, wherein the performing preprocessing on an image frame comprised in the target video according to the network state and a large-screen resolution, to obtain preprocessed video data corresponding to the target video comprises:
if video content of the target video comprises a 3D scene, playing the target video frame by frame, and sampling a rendered image in real time during playback;
converting a 3D image frame corresponding to the 3D scene into a 2D image frame;
performing preprocessing on the 2D image frame according to the network state and the large-screen resolution, to obtain the preprocessed video data corresponding to the target video.

4. The video playback method according to claim 1 or 2, wherein the preprocessing comprises the image frame blending, and the method further comprises:
for a target image frame on which the image frame blending is to be performed, storing the target image frame prior to the image frame blending is performed.

5. The video playback method according to claim 1 or 2, wherein the encoding the preprocessed video data, to obtain encoded video data corresponding to the target video comprises:
performing binary encoding on the preprocessed video data, to obtain encoded video data corresponding to the target video.

6. A video playback method, applied to a large screen in a video playback system, wherein the video playback system further comprises a client device and a server device respectively connected to the client device and the large screen, and a user interacts with the client device to remotely control the large screen to play a target video;
wherein the video playback method comprises:
receiving encoded video data corresponding to the target video sent by the server device, wherein the encoded video data is obtained by preprocessing and encoding the target video by the server device, and the preprocessing comprises at least one of image frame blending and image frame compression;
decoding the encoded video data, to obtain decoded video data corresponding to the target video;
performing at least one of image frame decompression and image frame separation processing on the decoded video data, and playing a processed image frame.

7. The video playback method according to claim 6, wherein the performing at least one of image frame decompression and image frame separation processing on the decoded video data, and playing a processed image frame comprises:
determining preprocessing corresponding to the decoded video data, wherein the preprocessing comprises at least one of image frame blending and image frame compression;
if the preprocessing corresponding to the decoded video data comprises the image frame compression, performing the image frame decompression on the decoded video data, to obtain image-frame-decompressed video data corresponding to the target video;
if the preprocessing corresponding to the decoded video data comprises the image frame blending, performing the image frame separation on the decoded video data, to obtain the processed image frame;
playing the processed image frame.

8. A video playback system, comprising: a client device, a server device, and a large screen, wherein the server device is respectively connected to the client device and the large screen;
the client device is configured to interact with a user to remotely control the large screen to play a target video;
the server device is configured to perform the video playback method according to any one of claims 1 to 5;
the large screen is configured to perform the video playback method according to any one of claims 6 or 7.

9. A video playback apparatus, applied to a server device in a video playback system, wherein the video playback system further comprises a client device and a large screen both connected to the server device, and a user interacts with the client device to remotely control the large screen to play a target video;
wherein the video playback apparatus comprises:
an acquisition module, configured to, in response to receiving a remote control playback instruction for the target video sent by the client device, acquire a network state of a network between the server device and the large screen;
a preprocessing module, configured to perform preprocessing on an image frame comprised in the target video according to the network state and a large-screen resolution, to obtain preprocessed video data corresponding to the target video, wherein the preprocessing comprises at least one of image frame blending and image frame compression;
an encoding module, configured to encode the preprocessed video data, to obtain encoded video data corresponding to the target video;
a sending module, configured to send the encoded video data to the large screen to play the target video on the large screen.

10. A video playback apparatus, applied to a large screen in a video playback system, wherein the video playback system further comprises a client device and a server device respectively connected to the client device and the large screen, and a user interacts with the client device to remotely control the large screen to play a target video;
wherein the video playback apparatus comprises:
a receiving module, configured to receive encoded video data corresponding to the target video sent by the server device, wherein the encoded video data is obtained by preprocessing and encoding the target video by the server device, and the preprocessing comprises at least one of image frame blending and image frame compression;
a decoding module, configured to decode the encoded video data, to obtain decoded video data corresponding to the target video;
a playback module, configured to perform at least one of image frame decompression and image frame separation on the decoded video data, and play a processed image frame.

11. An electronic device, comprising:
at least one processor;
and a memory communicatively connected with the at least one processor;
wherein the memory is configured to store instructions executable by the at least one processor, the instructions are executed by the at least one processor to enable the at least one processor to perform the video playback method according to any one of claims 1 to 7.

12. A computer-readable storage medium, wherein the computer-readable storage medium stores computer-executable instructions which, when executed by a processor, are configured to implement the video playback method according to any one of claims 1 to 7.

13. A computer program product, comprising a computer program which, when executed, implements the video playback method according to any one of claims 1 to 7.

14. A computer program, wherein when the computer program runs on a computer, the computer performs the video playback method according to any one of claims 1 to 7.
